(19) Europäisches Patentamt / European Patent Office / Office européen des brevets

(11) **EP 2 379 867 B1**

(12) **FASCICULE DE BREVET EUROPEEN**

(45) Date de publication et mention de la délivrance du brevet:
**03.12.2014 Bulletin 2014/49**

(21) Numéro de dépôt: **09803791.4**

(22) Date de dépôt: **18.12.2009**

(51) Int Cl.:
*F02D 41/00* (2006.01)  *F02M 25/07* (2006.01)

(86) Numéro de dépôt international:
**PCT/FR2009/001450**

(87) Numéro de publication internationale:
**WO 2010/076430 (08.07.2010 Gazette 2010/27)**

(54) **MOTEUR THERMIQUE A COMBUSTION INTERNE. SYSTEME DE REGULATION PROCEDE DE DIMENSIONNEMENT POUR LE MOTEUR ET VEHICULE AUTOMOBILE AVEC LE MOTEUR**

VERBRENNUNGSMOTOR, STEUERSYSTEM, VERFAHREN ZUR MOTORDIMENSIONIERUNG UND AUTO MIT DERARTIGEM MOTOR

INTERNAL COMBUSTION HEAT ENGINE, CONTROL SYSTEM, METHOD FOR DIMENSIONING THE ENGINE, AND AUTOMOBILE WITH SAID ENGINE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.12.2008 FR 0807134**

(43) Date de publication de la demande:
**26.10.2011 Bulletin 2011/43**

(73) Titulaire: **Valeo Systèmes de Contrôle Moteur 95800 Cergy Saint-Christophe (FR)**

(72) Inventeurs:
- **POTTEAU, Sébastien F-78510 Triel Sur Seine (FR)**
- **LUTZ, Philippe F-78100 Le Vesinet (FR)**
- **FOURNIGAULT, Damien F-78700 Conflans-Ste-Honorine (FR)**

(56) Documents cités:
**EP-A- 1 559 893      EP-A- 1 754 874
US-A1- 2004 065 274**

**Description**

Le domaine de la présente invention est celui des moteurs thermiques à combustion interne, et plus particulièrement des moteurs à essence, de préférence suralimentés.

Un moteur à combustion interne pour véhicule automobile comporte une chambre de combustion, généralement formée par un ou plusieurs cylindres, dans lesquels un mélange de carburant et d'air est brûlé pour générer le travail du moteur. Le mélange à l'admission peut être comprimé ou non, selon que le moteur comporte ou pas un compresseur de suralimentation.

Dans les cylindres sont montés mobiles des pistons qui entraînent un vilebrequin solidaire en rotation d'un arbre. De manière bien connue de l'homme du métier, on définit le régime d'un moteur comme étant le nombre de tours de l'arbre du moteur à un instant donné ; par ailleurs, on définit le couple fourni par le moteur comme étant le moment du couple mesuré sur l'arbre du moteur.

Dans le cas d'un moteur suralimenté, qui comprend des moyens de compression tels qu'un compresseur ou un turbocompresseur, le mélange est aspiré par le moteur, comprimé par le compresseur, admis dans les cylindres où il est brûlé puis évacué par le circuit d'échappement. Dans le cas où les moyens de compression comprennent un turbocompresseur, les gaz d'échappement entraînent une turbine qui est solidaire mécaniquement du compresseur pour l'entraîner.

On sait par ailleurs que la plupart des moteurs thermiques à combustion interne, et plus spécialement les moteurs Diesel et les moteurs à essence à injection directe, produisent des oxydes d'azote, généralement désignés NOx, dont les effets sur l'environnement sont particulièrement néfastes. Un moyen connu pour limiter la production d'oxydes d'azote consiste à recycler une partie des gaz d'échappement pour l'injecter à l'admission du moteur. On parle de recirculation des gaz d'échappement, souvent désignée par l'acronyme anglais EGR, pour "Exhaust Gas Recirculation". La réduction des NOx par recirculation des gaz d'échappement est le résultat d'une baisse de la température dans la chambre de combustion, puisque la capacité calorifique des gaz d'échappement (principalement formés de $CO_2$ et de vapeur d'eau) est supérieure d'environ 20% à celle des gaz frais (l'expression "gaz frais" désigne le mélange gazeux aspiré dans le moteur avant la réinjection des gaz d'échappement recirculés ; les gaz frais sont donc généralement formés d'air et de vapeurs d'essence ; les gaz frais mélangés aux gaz d'échappement recirculés constituent les gaz d'admission). Les gaz d'échappement sont, en général, refroidis dans un échangeur de chaleur, avant leur réintroduction dans la chambre de combustion.

Cette technique d'EGR est essentiellement mise en oeuvre à faible régime (typiquement inférieur 2 à 3000t/min, soit environ 3 fois le régime de ralenti) et à faible charge (que l'on peut caractériser par un couple inférieur de moitié au couple maximal que le moteur est susceptible de délivrer), dans le but d'éviter les émissions de NOx lors d'une utilisation du véhicule en cycle urbain. Elle présente en outre un intérêt supplémentaire, à ces points de fonctionnement à faible régime et faible charge, en procurant une baisse de la consommation de carburant : du fait des gaz réinjectés la pression des gaz d'admission est voisine d'une atmosphère, alors qu'elle lui serait inférieure (0,7 ou 0,8 atm), pour une même masse de gaz frais aspirés, si le moteur n'aspirait que des gaz frais ; il s'ensuit que le moteur fournit un moindre travail pour assurer l'aspiration des gaz et consomme donc moins de carburant.

La recirculation des gaz d'échappement peut être dite "basse pression", lorsqu'elle est faite sur des gaz d'échappement prélevés après la turbine et réintroduits avant le compresseur, ou "haute pression", lorsqu'elle est faite sur des gaz prélevés avant la turbine et réintroduits après le compresseur.

La recirculation, qu'elle soit basse ou haute pression, est régulée par des moyens ad hoc, tels, par exemple, qu'une vanne trois voies et une commande de cette vanne par le boîtier de régulation du moteur.

Les constructeurs automobiles recherchent constamment à diminuer la consommation de leurs moteurs et à répondre à des normes de plus en plus sévères en matière d'émission de polluants, comme celle des NOx. Une des voies explorées est l'amélioration des moteurs à essence suralimentés, pour qu'ils deviennent compétitifs en matière de consommation avec les moteurs Diesel. La compression des gaz liée à la suralimentation se traduit en effet par une diminution du volume du moteur et corrélativement par une réduction des pertes par frottement.

Un des problèmes rencontrés avec les moteurs à essence suralimentés est leur sensibilité au phénomène de cliquetis, qui empêche de les utiliser au mieux de leurs performances, lesquelles sont optimisées avec un mélange air-carburant utilisé dans des conditions stoechiométriques (typiquement 14g d'air pour 1g de carburant). Le cliquetis est un phénomène de combustion anormale dans les moteurs à allumage commandé, perceptible depuis l'extérieur par un bruit métallique venant du moteur, qui peut être destructeur pour les pistons du moteur. Il résulte de l'apparition d'ondes de choc dans la chambre de combustion, qui sont initiées par une auto-inflammation des gaz non encore brûlés. Une augmentation du taux de compression (c'est-à-dire du rapport du volume de la chambre de combustion lorsque le piston est au point mort bas sur son volume lorsque le piston est au point mort haut) conduit en effet à une aggravation du phénomène de cliquetis. Alors qu'avec un moteur atmosphérique, c'est-à-dire sans suralimentation, on peut couramment atteindre des taux de compression de l'ordre de 11, les moteurs suralimentés sont, aujourd'hui, en pratique limités à des taux de l'ordre de 9.

Diverses solutions ont été imaginées pour contrer l'apparition du cliquetis et permettre une augmentation du taux de compression. On a par exemple proposé de dégrader l'avance à l'allumage, c'est-à-dire de retarder le moment où est enflammé le mélange air-carburant après le passage du piston à son point mort haut, autrement dit, après que les gaz atteignent leur pression maximale. On a également proposé une augmentation de la richesse en carburant en injectant plus de carburant qu'il n'en faudrait en conditions stoechiométriques, le carburant surabondant absorbant l'énergie qui pourrait conduire au cliquetis (la richesse s'entend du rapport entre la quantité de carburant injectée et la quantité de carburant correspondant à un mélange stoechiométrique (à la stoechiométrie, la richesse est donc égale à 1)).

Ces solutions se traduisent par une utilisation non optimale du carburant injecté et donc par une consommation excessive.

Le document EP 1 754 874 et US 2004/065274 décrit une méthode de contrôle pour moteur à combustion interne alimenté en hydrogène.

Le document décrit EP 1 559 893 décrit un appareil de contrôle d'un moteur à combustion interne permettant de réguler l'EGR en fonction d'une marge relative à une économie de carburant.

La présente invention a pour but de remédier à ces inconvénients en proposant un fonctionnement amélioré des moteurs à essence, et notamment des moteurs suralimentés à forts taux de compression. Elle vise à leur permettre de fonctionner à tout régime sans cliquetis, en utilisant un mélange aux conditions stoechiométriques qui soit enflammé avec une avance optimale par rapport au point de passage du piston à son point mort haut.

A cet effet, l'invention a pour objet un moteur thermique à combustion interne, avec au moins une chambre de combustion pour des gaz d'admission comportant un mélange constitué d'un carburant tel que l'essence et d'un comburant tel que l'air, relié à un circuit d'admission desdits gaz d'admission dans la chambre et à un circuit d'échappement des gaz brûlés hors de la chambre, un circuit de recirculation des gaz d'échappement (EGR) reliant le circuit d'échappement au circuit d'admission et un système de régulation de la recirculation des gaz d'échappement, caractérisé par le fait que le système de régulation est agencé pour que la recirculation des gaz d'échappement soit mise en oeuvre pour au moins un point de fonctionnement, défini par un régime du moteur et un couple fourni par le moteur, pour lequel le couple délivré est supérieur à 50% du couple maximal du moteur.

La recirculation de gaz d'échappement à des charges élevées (c'est-à-dire pour un couple important) permet d'éviter le phénomène de cliquetis. Il est alors possible de tirer le meilleur parti du moteur et de le faire fonctionner dans des conditions optimales en termes de consommation.

Pour tout moteur, on définit un diagramme de fonctionnement, associant le couple fourni par le moteur au régime auquel il tourne ; à chaque régime est associé un couple maximal que le moteur peut délivrer. La courbe reliant les couples maximaux aux divers régimes présente un maximum, qui est désigné sous le nom de couple maximal du moteur ; ce couple maximal est délivré à un régime particulier, dit régime de couple maximal.

Dans un mode préférentiel de réalisation, le système de régulation est agencé pour que la recirculation des gaz d'échappement soit mise en oeuvre à des régimes supérieurs à 3 fois le régime de ralenti du moteur. Le phénomène de cliquetis est négligeable en dessous de ce régime. Le régime de ralenti est défini, de manière classique, comme étant un régime moteur bas (voisin de 1000t/min, selon les moteurs), destiné à maintenir le moteur en marche sans actionner l'accélérateur.

De façon préférentielle le mélange entre le carburant et le comburant est, pour ledit point de fonctionnement, dosé sensiblement aux proportions stoechiométriques et de préférence enflammé à un instant correspondant sensiblement aux conditions optimales d'avance à l'allumage. On obtient ainsi la meilleure performance possible pour le moteur en termes de couple à tout régime, et ce, avec une consommation minimale. De manière bien connue de l'homme du métier, on définit l'avance à l'allumage comme l'angle que fait le vilebrequin, au moment de l'allumage du mélange (par exemple par activation d'une bougie dans le cylindre) avec la position qu'il aura au point mort haut, c'est-à-dire au moment où le volume du cylindre disponible pour le mélange sera minimal. Les conditions optimales d'avance à l'allumage correspondent à un réglage de l'avance à l'allumage permettant, selon les régimes, d'obtenir le couple maximal au régime considéré.

Selon un mode de réalisation particulier le moteur thermique est un moteur suralimenté, par compression des gaz d'admission. La réinjection des gaz d'échappement est d'autant plus utile aux moteurs suralimentés qu'ils sont particulièrement sensibles au phénomène de cliquetis.

De façon préférentielle, le fonctionnement du moteur étant paramétré par un taux de compression de la chambre de combustion et un taux de recirculation des gaz d'échappement, le système de régulation est agencé pour que le taux de recirculation audit point de fonctionnement, exprimé en pourcentage massique, soit égal à trois fois le taux de compression du moteur, diminué de 13, avec une tolérance de 2. Le taux d'EGR est défini comme le rapport entre la masse de gaz d'échappement réinjectés entrant par unité de temps dans le circuit d'admission et la masse totale de gaz entrant par unité de temps dans la chambre de combustion. La Demanderesse a eu le mérite de rechercher s'il existait une relation entre le taux d'EGR optimal à fortes charges et le taux de compression ; elle a trouvé qu'une telle relation existe et que ce taux d'EGR garantit un fonctionnement optimal du moteur en termes de consommation, sans cliquetis, dans son domaine de fonctionnement à fortes charges (couple fourni supérieur à 50% du couple maximal).

De façon préférentielle le système de régulation est agencé pour que le taux d'EGR soit égal, pour un point de fonctionnement pour lequel le couple délivré est inférieur à 50% du couple maximal du moteur, à trois fois le taux de compression du moteur, diminué de 13, avec une tolérance de 5. Aux faibles charges, on peut ainsi choisir le taux d'EGR dans une plus grande gamme de valeurs, sans risque de cliquetis et l'optimiser pour réduire la consommation de carburant.

L'invention concerne encore un système de régulation de la recirculation des gaz d'échappement pour le moteur défini ci-dessus, comportant au moins une vanne de régulation de la recirculation des gaz d'échappements et un module de régulation commandant ladite vanne.

L'invention porte également sur un procédé de dimensionnement du circuit de recirculation des gaz d'échappement du moteur défini ci-dessus, caractérisé en ce que le taux de recirculation pris en compte pour le dimensionnement du circuit EGR est, exprimé en pourcentage massique, égal à trois fois le taux de compression du moteur, diminué de 13, avec une tolérance de 2.

L'invention porte encore sur un procédé de définition d'une loi de régulation de la recirculation des gaz d'échappement du moteur défini ci-dessus dans lequel on définit une recirculation des gaz d'échappement pour les points de fonctionnement pour lesquels le couple délivré est supérieur à 50% du couple maximal du moteur. Grâce à ce procédé on définit la régulation du moteur avec l'assurance de ne pas rencontrer de cliquetis et de disposer d'un fonctionnement optimum du moteur en termes de consommation.

L'invention a également pour objet un véhicule mû par un moteur à combustion interne comportant les caractéristiques du moteur défini ci-dessus.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :

- la figure 1 est une vue schématique d'un moteur suralimenté avec deux dispositifs de recirculation des gaz d'échappement, en haute et en basse pression ;
- la figure 2 est un graphique donnant la position du point de fonctionnement d'un moteur thermique à combustion interne, dans un diagramme régime-couple ;
- la figure 3 est un graphique donnant l'évolution du couple d'un moteur à combustion interne, à régime donné, en fonction de son avance à l'allumage.

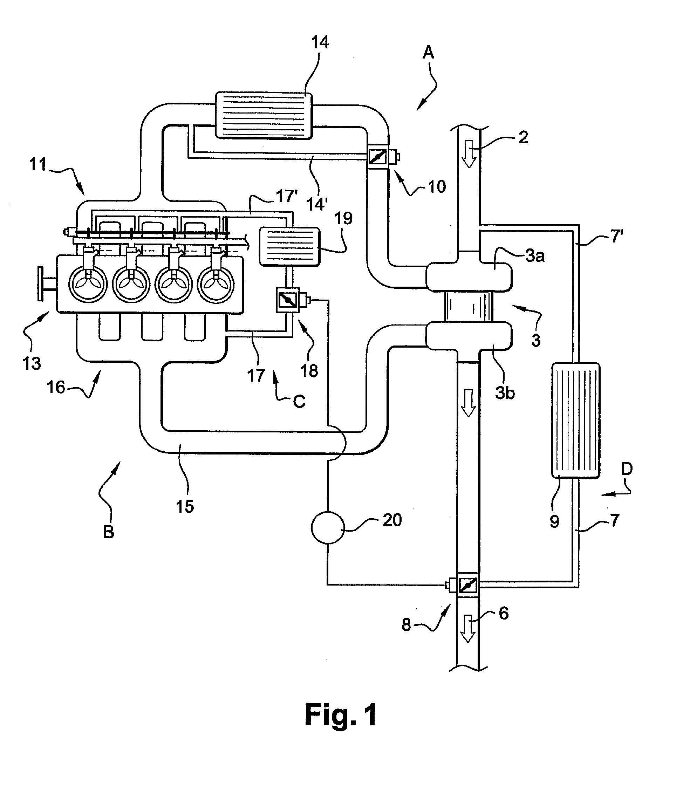

En se référant à la figure 1, on voit un moteur suralimenté 13 comportant quatre cylindres - tous formant une chambre de combustion - alimentés en gaz d'admission par un circuit d'admission A, rattaché au moteur par une pipe d'admission 11, et reliés à un circuit B d'échappement des gaz brûlés comportant notamment un collecteur 16 des gaz d'échappement. Les gaz frais sont acheminés vers le moteur par une conduite d'admission 2 puis comprimés par le compresseur 3a d'un turbocompresseur 3 et envoyé vers la pipe d'admission 11 ; le compresseur 3a est mécaniquement relié à une turbine 3b. Les gaz d'échappement, en sortie du collecteur d'échappement 16, sont entraînés, via une conduite d'échappement 15, vers la turbine 3b du turbocompresseur 3 où ils sont détendus pour fournir la puissance nécessaire à l'entraînement du compresseur 3a. Ils peuvent alors soit être évacués vers le pot d'échappement du véhicule par une conduite 6, soit être recirculés.

Deux dispositifs de recirculation des gaz d'échappement (EGR) indépendants sont prévus: un dispositif EGR haute pression C et un dispositif EGR basse pression D. L'invention s'applique à l'un ou l'autre de ces dispositifs C, D utilisé seul, ou aux deux dispositifs utilisés conjointement.

Le dispositif haute pression C comporte une première conduite de dérivation 17 prélevant des gaz d'échappement dans le collecteur 16 des gaz d'échappement. Une première vanne de régulation 18 est montée dans cette conduite 17 et reliée à un premier échangeur de chaleur 19. Lorsqu'ils empruntent la première conduite 17, la vanne de régulation 18 et le premier échangeur 19, les gaz d'échappement sont réinjectés, via une conduite de réinjection 17', dans la pipe d'admission 11.

Le dispositif basse pression D comporte une seconde conduite de dérivation 7 prélevant des gaz d'échappement en aval de la turbine 3b du turbocompresseur 3. Une seconde vanne de régulation 8 est montée dans cette conduite et reliée à un second échangeur de chaleur 9. Lorsqu'ils empruntent la seconde conduite 7, la vanne de régulation 8 et le deuxième échangeur 9, les gaz d'échappement sont réinjectés, via une conduite de réinjection 7', en amont du compresseur 3a du turbocompresseur 3, dans la conduite d'admission 2.

Les vannes de régulation 8, 18 sont agencées pour réguler le taux d'EGR. Elles sont à cet effet reliées à un système 20 de régulation du taux d'EGR qui commande les vannes de régulation 8, 18 pour prélever plus ou moins de gaz d'échappement dans le circuit d'échappement B. Le système de régulation 20 peut notamment comporter un microcontrôleur, de manière classique.

Un dispositif de régulation de la température des gaz d'admission (c'est-à-dire de l'addition des gaz frais et des gaz d'échappement réinjectés) est également prévu et comporte notamment une troisième vanne de régulation 10, qui dirige les gaz d'admission vers un troisième échangeur de chaleur 14 permettant de les refroidir ou dans une canalisation 14' de by-pass de l'échangeur 14 guidant les gaz directement dans la pipe d'admission 11 ; les gaz peuvent emprunter l'une ou l'autre des voies en tout ou partie.

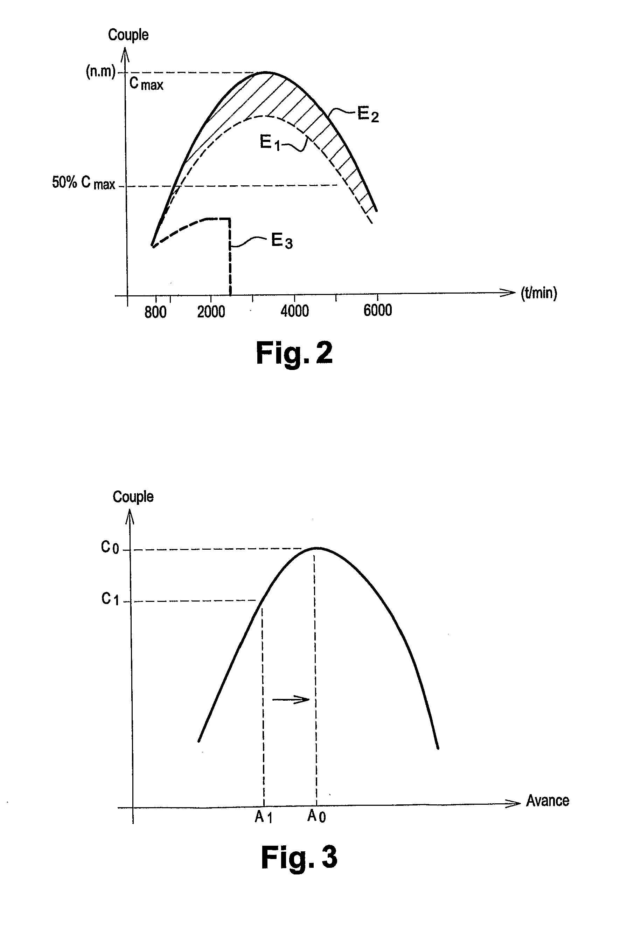

La figure 2 représente un diagramme de fonctionnement couple (en N.m) en fonction du régime de rotation N (en tours par minute (t/min)) pour un moteur suralimenté, bien connu de l'homme du métier. On définit le "point de fonctionnement du moteur" comme étant, à un instant donné, le point de ce diagramme défini par le régime N du moteur et le couple C qu'il fournit. Le point de fonctionnement du moteur se situe, à tout instant, à une position qui indique la charge du moteur, qui s'entend du rapport entre le couple que fournit le moteur en tournant à un régime donné et le couple maximal qu'il est susceptible de délivrer à ce régime.

La courbe $E_1$ définit le couple maximal, en fonction du régime, qu'il était possible d'obtenir dans l'art antérieur en évitant l'apparition du cliquetis, que ce soit par dégradation de l'avance à l'allumage ou par enrichissement du mélange au delà des conditions stoechiométriques, comme expliqué plus haut. La courbe $E_2$ définit le couple maximal que le moteur pourrait délivrer, dans des conditions nominales, si le phénomène de cliquetis n'existait pas et s'il n'y avait pas besoin de prévenir son apparition. La zone hachurée entre ces deux courbes $E_1$, $E_2$ représente donc la zone de fonctionnement interdite dans l'art antérieur, du fait du cliquetis. La zone délimitée par la courbe $E_3$ correspond aux points de fonctionnement (essentiellement en-dessous de 3 fois le régime de ralenti et à une charge partielle inférieure à 50%) pour lesquels la recirculation des gaz d'échappement était mise en oeuvre dans l'art antérieur. Notons qu'on définit le "couple maximal du moteur" $C_{max}$ comme étant le point haut de la courbe $E_2$, c'est-à-dire le couple le plus important que le moteur puisse fournir, en tenant compte de tous ses régimes.

La figure 3 représente le couple délivré par un moteur, à un régime donné, en fonction de l'avance à l'allumage qu'on lui applique, le moteur étant alimenté avec un mélange de carburant et de comburant dans les proportions stoechiométriques. Sans réinjection de gaz d'échappement, l'avance peut être augmentée jusqu'à une valeur $A_1$, à partir de laquelle apparaît le phénomène de cliquetis. Le couple délivré augmente avec l'avance jusqu'à une valeur $C_1$, obtenue avec l'avance $A_1$, qui est inférieure au couple maximal $C_0$ que le moteur pourrait délivrer si le cliquetis n'existait pas. Cette valeur serait obtenue pour une avance $A_0$ supérieure à $A_1$.

Conformément à l'invention, la recirculation des gaz d'échappement est mise en oeuvre pour des points de fonctionnement du moteur correspondant à un couple supérieur à 50% du couple maximal du moteur, c'est-à-dire à $0,5.C_{max}$, autrement dit, à une charge du moteur supérieure à 0,5.

Une telle recirculation des gaz d'échappement permet d'obtenir, à tout régime, un fonctionnement sans cliquetis pour un couple maximal possible $C_0$ à ce régime, avec une avance à l'allumage égale à $A_0$, sans enrichissement du mélange, c'est-à-dire avec un mélange réalisé dans les proportions stoechiométriques entre l'essence et l'air.

Autrement dit, il s'est avéré, après étude de différents cas de fonctionnement de moteurs à essence suralimentés, qu'il est possible de supprimer le cliquetis à forte charge, sans dégrader le fonctionnement du moteur en termes d'avance ou de richesse. Ce résultat est obtenu par une réinjection de gaz d'échappement dans tout le domaine de fonctionnement du moteur, c'est-à-dire même à des charges correspondant à un couple supérieur à 50% du couple maximal que le moteur est susceptible de délivrer.

Selon une forme de réalisation, une augmentation du refroidissement des gaz d'EGR est associée à ce mode de fonctionnement, pour compenser l'apport de chaleur provenant, à fort régime, de ces gaz d'échappement.

Une relation simple a en outre pu être établie entre le taux d'EGR qu'il convient de réinjecter à tout régime (ce taux étant mesuré comme le pourcentage, par unité de temps, de la masse de gaz d'échappement réinjectés par rapport à la masse totale des gaz d'admission) et le taux de compression du moteur.

Le taux d'EGR optimal ($T_{ECR}$) est ainsi lié au taux de compression du moteur ($T_C$) par la relation suivante :

$$T_{EGR} = 3.T_C - 13$$

A titre d'exemple, avec un taux de compression de 9, le couple maximal peut être obtenu à tout régime, sans dégradation de l'avance et sans enrichissement du mélange, avec un taux d'EGR compris entre 14 et 15%. Pour un moteur à taux de compression de 11, le taux d'EGR optimal est de 20%.

Cette relation permet, entre autres, aux concepteurs de moteurs de dimensionner a priori le circuit de réinjection des gaz d'échappement à partir du taux de compression choisi, sans avoir à effectuer de longs essais de mise au point au banc. Ce dimensionnement porte sur la taille des conduites 7, 17 de dérivations des gaz d'échappement et des conduites 7', 17' de réinjection des gaz d'échappement à l'admission et sur la définition de la loi de commande, par le système de régulation 20, de la vanne de régulation 8 ou 18 associée.

Il est bien évident que ces valeurs peuvent être approchées sans que le moteur fonctionne de façon très éloignée de l'optimum, c'est à dire sans que le cliquetis apparaisse de façon significative. En règle pratique on retient que le résultat de la relation ci-dessus reste valable avec une approximation égale, en plus ou en moins, à la valeur 2. Ainsi, par exemple, dans le cas d'un moteur à taux de compression égal à 8, le taux d'EGR optimum à réinjecter devra ainsi être compris entre 9 et 13%, l'optimum étant toujours égal à 11.

Pour les points de fonctionnement du moteur correspondant à un couple inférieur à 50% du couple maximal $C_{max}$ pouvant être délivré par le moteur, la recirculation des gaz d'échappement peut être revue à la baisse car les besoins sont différents ; en effet, le phénomène de cliquetis est absent et la recirculation des gaz d'échappement surtout utilisée pour réduire la consommation d'essence. Ainsi, la relation entre taux d'EGR $T_{ECR}$ et taux de compression $T_C$ peut s'écrire, pour ces points de fonctionnement:

$$T_{EGR} = 3.T_C - 13,$$

avec une tolérance de 5.

L'invention a été décrite dans le cas de moteurs suralimentés, car elle apporte une solution spécialement efficace à leur problème de cliquetis, auquel ils sont particulièrement sensibles. Mais elle peut, tout aussi bien, être appliquée à des moteurs atmosphériques, avec des bénéfices analogues.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Moteur thermique à combustion interne, avec au moins une chambre de combustion pour des gaz d'admission comportant un mélange constitué d'un carburant tel que l'essence et d'un comburant tel que l'air, relié à un circuit d'admission (A) desdits gaz d'admission dans la chambre et à un circuit d'échappement (B) des gaz brûlés hors de la chambre, un circuit de recirculation des gaz d'échappement (C, D) reliant le circuit d'échappement au circuit d'admission et un système de régulation de la recirculation des gaz d'échappement, **caractérisé par le fait que** le système de régulation est agencé pour que la recirculation des gaz d'échappement soit mise en oeuvre pour au moins un point de fonctionnement, défini par un régime du moteur et un couple fourni par le moteur, pour lequel le couple délivré est supérieur à 50% du couple maximal du moteur ; et en ce que, le fonctionnement du moteur étant paramétré par un taux de compression de la chambre de combustion et un taux de recirculation des gaz d'échappement, le système de régulation est agencé pour que le taux de recirculation audit point de fonctionnement, exprimé en pourcentage massique, soit égal à trois fois le taux de compression du moteur, diminué de 13, avec une tolérance de 2.

2. Moteur thermique selon la revendication 1 dans lequel le système de régulation est agencé pour que la recirculation des gaz d'échappement soit mise en oeuvre à des régimes supérieurs à 3 fois le régime de ralenti du moteur.

3. Moteur thermique selon l'une des revendications 1 ou 2 dans lequel le mélange entre le carburant et le comburant est, pour ledit point de fonctionnement, dosé sensiblement aux proportions stoechiométriques et de préférence enflammé à un instant correspondant sensiblement aux conditions optimales d'avance à l'allumage.

4. Moteur thermique selon l'une des revendications 1 à 3, suralimenté par compression des gaz d'admission.

5. Moteur thermique selon la revendication 1 dans lequel le système de régulation est agencé pour que le taux de recirculation soit égal, pour un point de fonctionnement pour lequel le couple délivré est inférieur à 50% du couple maximal du moteur, à trois fois le taux de compression du moteur, diminué de 13, avec une tolérance de 5.

6. Système de régulation de la recirculation des gaz d'échappement pour le moteur de l'une des revendications 1 à 5, comportant au moins une vanne de régulation (8, 18) de la recirculation des gaz d'échappements et un module de régulation (20) commandant ladite vanne.

7. Procédé de dimensionnement du circuit de recirculation (C, D) des gaz d'échappement EGR du moteur de l'une des revendications 1 à 5, **caractérisé en ce que** le taux de recirculation pris en compte pour le dimensionnement du circuit EGR est, exprimé en pourcentage massique, égal à trois fois le taux de compression du moteur, diminué de 13, avec une tolérance de 2, la recirculation des gaz d'échappement étant mise en oeuvre pour les points de fonctionnement pour lesquels le couple délivré est supérieur à 50% du couple maximal du moteur.

8. Véhicule automobile équipé d'un moteur de l'une des revendications 1 à 5.

**Patentansprüche**

1. Verbrennungsmotor mit mindestens einer Brennkammer für Ansauggase, die ein Gemisch aufweist, das aus einem Kraftstoff, wie zum Beispiel Benzin, und einem verbrennungsfördernden Stoff, wie zum Beispiel Luft besteht, der mit einem Ansaugkreislauf (A) der Ansauggase in die Kammer und mit einem Auspuffkreislauf (B) der verbrannten Gase aus der Kammer heraus, einem Rückführungskreislauf (C, D) der Auspuffgase, der den Auspuffkreislauf mit dem Ansaugkreislauf verbindet, und einem Abgasrückführungsregelsystem verbunden ist, **dadurch**

**gekennzeichnet, dass** das Regelsystem eingerichtet ist, damit die Rückführung der Abgase für mindestens einen Betriebspunkt umgesetzt wird, der durch eine Motordrehzahl und ein Drehmoment, das von dem Motor geliefert wird, definiert ist, bei dem das gelieferte Drehmoment größer ist als 50 % des maximalen Drehmoments des Motors, und dass, da der Betrieb des Motors durch eine Kompressionsrate der Brennkammer und eine Rückführungsrate der Abgase parametriert ist, das Regelsystem eingerichtet ist, damit die Rückführungsrate an dem Betriebspunkt, ausgedrückt in Gewichtsprozent, gleich drei Mal der Kompressionsrate des Motors, verringert um 13, mit einer Toleranz von 2 ist.

2. Verbrennungsmotor nach Anspruch 1, bei dem das Regelsystem eingerichtet ist, damit die Rückführung der Abgase bei Drehzahlen umgesetzt wird, die höher als das Dreifache der Leerlaufdrehzahl des Motors sind.

3. Verbrennungsmotor nach einem der Ansprüche 1 oder 2, bei dem das Gemisch aus Kraftstoff und verbrennungsförderndem Stoff für den Betriebspunkt im Wesentlichen mit stöchiometrischen Anteilen dosiert ist und vorzugsweise in einem Augenblick entzündet wird, der im Wesentlichen den optimalen Bedingungen der Zündvorstellung entspricht.

4. Verbrennungsmotor nach einem der Ansprüche 1 bis 3, der durch Kompression der Ansauggase aufgeladen ist.

5. Verbrennungsmotor nach Anspruch 1, bei dem das Regelsystem eingerichtet ist, damit die Rückführungsrate für einen Betriebspunkt, bei dem das gelieferte Drehmoment kleiner ist als 50 % des maximalen Drehmoments des Motors gleich drei Mal der Kompressionsrate des Motors, verringert um 13, mit einer Toleranz von 5 ist.

6. Abgasrückführungsregelsystem für den Motor eines der Ansprüche 1 bis 5, das mindestens ein Regelventil (8, 18) der Rückführung der Abgase und ein Regelmodul (20), das das Ventil steuert, aufweist.

7. Dimensionierungsverfahren des Rückführungskreislaufs (C, D) der AGR-Abgase des Motors eines der Ansprüche 1 bis 5, **dadurch gekennzeichnet, dass** die Rückführungsrate, die für die Dimensionierung des AGR-Kreislaufs berücksichtigt wird, in Gewichtsprozent ausgedrückt gleich drei Mal der Kompressionsrate des Motors, verringert um 13, mit einer Toleranz von 2 ist, wobei die Rückführung der Abgase für die Betriebspunkte umgesetzt wird, bei welchen das gelieferte Drehmoment größer ist als 50 % des maximalen Motordrehmoments.

8. Kraftfahrzeug, das mit einem Motor eines der Ansprüche 1 bis 5 ausgestattet ist.

**Claims**

1. Internal combustion engine with at least one combustion chamber for intake gases comprising a mixture consisting of a fuel such as gasoline and an oxidant such as air, connected to an intake circuit (A) for admitting said intake gases into the chamber and to an exhaust circuit (B) for exhausting the burnt gases from the chamber, an exhaust gas recirculation circuit (C, D) connecting the exhaust circuit to the intake circuit and a system for controlling the recirculation of the exhaust gases, **characterized in that** the control system is designed so that the recirculation of the exhaust gases is carried out for at least one operating point, defined by an engine speed and a torque supplied by the engine, for which point the torque delivered is more than 50% of the maximum engine torque; and **in that**, with the engine operation being parametrized by a combustion chamber compression ratio and an exhaust gas recirculation ratio, the control system is designed so that the recirculation ratio at said operating point, expressed as a percentage by mass, is equal to three times the engine compression ratio, decreased by 13, with a tolerance of 2.

2. Combustion engine according to Claim 1, in which the control system is designed so that the recirculation of the exhaust gases is performed at speeds higher than three times the low idle speed of the engine.

3. Combustion engine according to either of Claims 1 and 2, in which the mixture of fuel and oxidant is, for said operating point, metered substantially to the stoichiometric proportions and, preferably, ignited at an instant substantially corresponding to the optimal ignition advance conditions.

4. Combustion engine according to one of Claims 1 to 3, which is supercharged by compressing the intake gases.

5. Combustion engine according to Claim 1, in which the control system is designed so that the recirculation ratio is equal, for an operating point at which the torque delivered is less than 50% of the maximum engine torque, to three times the engine compression ratio, decreased by 13, with a tolerance of 5.

6. Control system for controlling the recirculation of the exhaust gases for the engine according to one of Claims 1 to 5, comprising at least one exhaust gas recirculation control valve (8, 18) and a control module (20) controlling said valve.

7. Method of dimensioning the exhaust gas recirculation EGR circuit (C, D) of the engine according to one of Claims 1 to 5, **characterized in that** the recirculation ratio taken into consideration when dimensioning the EGR circuit is, expressed as a percentage by mass, equal to three times the engine compression ratio, decreased by 13, with a tolerance of 2, the recirculation of the exhaust gases being carried out for operating points for which the delivered torque is greater than 50% of the maximum engine torque.

8. Motor vehicle equipped with an engine according to one of Claims 1 to 5.

EP 2 379 867 B1

**Fig. 1**

Couple

(n.m)
$C_{max}$

$E_2$
$E_1$

50% $C_{max}$

$E_3$

800  2000    4000    6000    (t/min)

**Fig. 2**

Couple

$C_0$

$C_1$

$A_1$  $A_0$    Avance

**Fig. 3**

## RÉFÉRENCES CITÉES DANS LA DESCRIPTION

**Documents brevets cités dans la description**

- EP 1754874 A
- US 2004065274 A

- EP 1559893 A